# EUROPEAN PATENT APPLICATION

(11) **EP 4 118 957 A1**
(43) Date of publication of application: **18.01.2023**
(21) Application number: 21817516.4
(22) Date of filing: 01.06.2021
(51) Int. Cl.: A01K 1/00, A01K 29/00

(54) **LIVESTOCK CONTROL SYSTEM, LIVESTOCK CONTROL SERVER, LIVESTOCK CONTROL METHOD, AND LIVESTOCK CONTROL PROGRAM**

(30) Priority: 02.06.2020 JP 2020096515
(71) Applicant: Eco-Pork Co., Ltd., Tokyo, 130-0003 (JP)
(72) Inventor: NISHIMURA Kentaro, Tokyo 130-0003 (JP); KAMBAYASHI Takashi, Tokyo 130-0003 (JP)
(74) Representative: Fédit-Loriot
(86) International application number: PCT/JP2021/020875
(87) International publication number: WO 2021/246409

(57) **Abstract**

A livestock control system includes a barn measurement device 511 configured to acquire rearing environment information on a barn 501; a barn device 512 configured to adjust rearing environment in the barn; and an analysis unit 111 configured to generate a rearing environment parameter which is information on target environment in the barn 501 by using the rearing environment information acquired by the barn measurement device. The analysis unit 111 is further configured to generate a second rearing environment parameter if it is determined that the rearing environment information acquired does not satisfy a predetermined condition after a predetermined time elapsed from the start of the control of the barn device 512 in accordance with a first rearing environment parameter.

## Description

### TECHNICAL FIELD

The present disclosure relates to a livestock control system, a livestock control server, a livestock control method, and a livestock control program.

### BACKGROUND ART

In order to prepare rearing environment in a livestock industry handling livestock such as cattle, pigs, and chickens, computers have been introduced and systematized to manage the rearing environment. In barns where livestock is reared, information on the barns, such as temperature and humidity, is collected and used for control of the rearing environment to realize efficient livestock production.

For example, Patent Document 1 discloses a pig rearing management system in which optimal rearing environment is calculated based on input livestock information and livestock information measured in real time, to control barn environment.

### CITATION LIST

### PATENT DOCUMENT

PATENT DOCUMENT 1: Japanese Unexamined Patent Publication No. 2013-247941

### SUMMARY OF THE INVENTION

### TECHNICAL PROBLEM

However, the technology described in Patent Document 1 has a problem that it is difficult to perform optimal control according to the barn environment, a facility capacity, and the like which differ for each barn.

The present disclosure was made to solve such a problem, and is intended to provide a livestock control system, a livestock control server, a livestock control method, and a livestock control program which are capable of controlling suitable rearing environment according to a facility capacity and the like in each barn.

### SOLUTION TO THE PROBLEM

In order to achieve the objective, a livestock control system according to the present disclosure is a livestock control system for controlling environment in a barn where livestock is reared. The livestock control system includes a barn measurement device configured to acquire rearing environment information on the barn; a barn device configured to adjust rearing environment in the barn; and an analysis unit configured to generate a rearing environment parameter which is information on target environment in the barn by using the rearing environment information acquired by the barn measurement device. The analysis unit is further configured to generate a second rearing environment parameter if it is determined that the rearing environment information acquired by the barn measurement device does not satisfy a predetermined condition after a predetermined time elapsed from the start of the control of the barn device in accordance with a first rearing environment parameter.

The livestock control system may further include: a control management unit configured to generate a control target value for controlling the barn device. The control management unit may generate a first control target value by using the first rearing environment parameter generated by the analysis unit, and the analysis unit may further be configured to generate a second rearing environment parameter if it is determined that the rearing environment information acquired by the barn measurement device does not satisfy a predetermined condition after a predetermined time elapsed from the start of the control of the barn device in accordance with the first control target value.

The livestock control system may further include: a display unit configured to display information to a user; and an input unit configured to receive an input of information from the user. The display unit may display information according to the first rearing environment parameter and information according to the second rearing environment parameter, and the input unit may receive, from the user, an input for allowing the control management unit to generate a second control target value by using the second rearing environment parameter.

The analysis unit may generate the rearing environment parameter by further using rearing history information on a rearing history of the livestock.

The second rearing environment parameter may be selected from multiple rearing environment parameters generated in advance by the analysis unit.

The analysis unit may generate the second rearing environment parameter by using an environment change condition calculated in accordance with the rearing environment information acquired by the barn measurement device in the barn with rearing environment adjusted by the barn device controlled in accordance with the first rearing environment parameter.

The analysis unit may generate the rearing environment parameter without using the environment change condition after a predetermined time elapsed from generation of the second rearing environment parameter.

The analysis unit may generate the rearing environment parameter in accordance with a breed of the livestock reared in the barn, a time elapsed from birth or weaning of the livestock reared in the barn, or the number of births of the livestock reared in the barn.

The livestock control system may further include a controller configured to control the barn device. The controller may sequentially calculate a control operation amount of the barn device so that the rearing environment information acquired by the barn measurement device reaches a state corresponding to the rearing environment parameter, and the controller may control the barn device by using the control operation amount calculated.

A frequency of generating the rearing environment parameter by the analysis unit may be less than a frequency of generating the control operation amount by the controller.

The rearing environment parameter may be at least one piece of information selected from temperature information, humidity information, atmospheric pressure information, air flow information, odor, a light quantity, sound information, a feeding amount, and a water supply amount.

The rearing environment parameter may be at least two pieces of information selected from temperature information, humidity information, atmospheric pressure information, air flow information, odor information, light quantity information, sound information, feeding amount information, and water supply amount information, and the analysis unit may generate the second rearing environment parameter by changing the at least two pieces of information included in the first rearing environment parameter.

The rearing history information may include at least one piece of information selected from a rearing record, a disease record, a treatment record, and a shipping record of the livestock.

The rearing environment information may include at least one piece of information selected from temperature information, humidity information, atmospheric pressure information, air flow information, odor information, light quantity information, sound information, feeding amount information, water supply amount information, body temperature information, weight information, and activity amount information.

The barn measurement device may include at least one device selected from a temperature measuring device, a humidity measuring device, an atmospheric pressure measuring device, an air flow measuring device, an odor measuring device, a light quantity measuring device, a sound measuring device, a feeding amount measuring device, a water supply amount measuring device, a body temperature measuring device, a weight measuring device, and an activity amount measuring device.

The barn device may include at least one device selected from a heater, a cooler, a ventilator, a sprayer, a humidifier, a dehumidifier, an illumination device, a window opening and closing device, a feeder, a drinking water server, an automatic feeder, and an automatic water server.

The livestock control system may further include: a disease monitoring unit. The disease monitoring unit may generate a predictive factor parameter of disease occurrence by using a relationship between the disease occurrence and the rearing environment parameter based on at least one piece of information selected from a rearing record, a disease record, and a treatment record of the livestock in rearing history information, determine a monitoring parameter by using the predictive factor parameter of the disease occurrence, and generate alarm information if it is determined that the rearing environment information acquired by the barn measurement device satisfies a predetermined condition for the monitoring parameter.

The livestock may include a pig.

In order to achieve the objective, a livestock control server according to the present disclosure is a livestock control server for controlling environment in a barn where livestock is reared, and includes: an analysis unit configured to generate a rearing environment parameter which is information on target environment in the barn by using rearing environment information on the barn acquired by a barn measurement device. The analysis unit is further configured to generate a second rearing environment parameter if it is determined that the rearing environment information acquired by the barn measurement device does not satisfy a predetermined condition after a predetermined time elapsed from the start of the control of a barn device for adjusting rearing environment in the barn in accordance with a first rearing environment parameter.

In order to achieve the objective, a livestock control method according to the present disclosure includes: generating, by an analysis unit, a first rearing environment parameter which is information on target environment in a barn by using rearing environment information on the barn acquired by a barn measurement device; determining, by the analysis unit, whether or not the rearing environment information acquired by the barn measurement device satisfies a predetermined condition after a predetermined time elapsed from the start of the control of a barn device for adjusting rearing environment in the barn in accordance with the first rearing environment parameter; and generating, by the analysis unit, a second rearing environment parameter if it is determined that the rearing environment information acquired by the barn measurement device does not satisfy the predetermined condition in the determining.

In order to achieve the objective, a livestock control program according to the present disclosure is a livestock control program for controlling environment in a barn where livestock is reared, and causes a computer to execute: generating a first rearing environment parameter which is information on target environment in the barn by using rearing environment information on the barn acquired by a barn measurement device; determining whether or not the rearing environment information acquired by the barn measurement device satisfies a predetermined condition after a predetermined time elapsed from the start of the control of a barn device for adjusting rearing environment in the barn in accordance with the first rearing environment parameter; and generating a second rearing environment parameter if it is determined that the rearing environment information acquired by the barn measurement device does not satisfy the predetermined condition in the determining.

### ADVANTAGES OF THE INVENTION

The livestock control system, the livestock control server, the livestock control method, and the livestock control program of the present disclosure including the foregoing means can control the rearing environment to be optimal according to a facility capacity and the like in each barn.

### BRIEF DESCRIPTION OF THE DRAWINGS

FIG. 1 is a system configuration diagram illustrating a livestock control system according to an embodiment of the present disclosure.
FIG. 2 illustrates a relationship between a temperature and a humidity in a barn according to the embodiment of the present disclosure.
FIG. 3 is a flowchart illustrating processes of the livestock control system according to the embodiment of the present disclosure.
FIG. 4 illustrates a display unit of a user terminal device according to the embodiment of the present disclosure.
FIG. 5 is a schematic block diagram illustrating the configuration of a computer.

### DESCRIPTION OF EMBODIMENTS

Embodiments of the present disclosure will now be described below.

First, the term "livestock" generally refers to only animals such as cattle, horses, sheep, goats, and pigs, and do not include birds such as poultry. However, a target to be managed by using a livestock control system disclosed in the present embodiments is not limited to these animals, and may be poultry which is also a livestock product. Poultry refers to birds such as chickens, quails, ducks, and wild ducks, for example. The following description will be made assuming that target livestock products and livestock to be managed by the livestock control system disclosed in the present embodiments may include poultry, unless otherwise specified.

In the embodiments of the present disclosure described below, pigs are mainly taken as an example of livestock.

In the present embodiments, terms and the like in a case where livestock other than pigs is to be a target may be read as follows for, for example, cattle and horses. A barn which is a facility where the livestock products are reared may be read as a pig house for pigs, a cattle barn for cattle, and a stable for horses. A livestock pen which is a unit of a partitioned section in the barn is a pig pen for pigs, a cattle pen for cattle, and a horse pen for horses. Females for breeding of breeding livestock are mother pigs (or breeding mother pigs) for pigs, mother cattle (or breeding mother cattle) for cattle, and female horses (breeding female horses) for horses. Males for breeding of breeding livestock are boars (breeding boars) for pigs, breeding bulls for cattle, and breeding male horses for horses.

In the embodiments, a rearing environment parameter is an index indicating the rearing environment for livestock to optimize the rearing state of the livestock, and includes physical quantities such as temperature information, humidity information, atmospheric pressure information, air flow information, odor information, light quantity information, and sound information on a barn where the livestock is reared, information such as feeding amount information and water supply amount information on a barn where the livestock is reared, and combinations thereof.

Rearing environment information includes temperature information, humidity information, atmospheric pressure information, air flow information, odor information, light quantity information, sound information, feeding amount information, and water supply amount information on a barn, and body temperature information, weight information, and activity amount information on livestock.

A control target value is an actual target value of the rearing environment information on an environment state of a barn 501 to be described later.

The control target value is a value determined for each rearing environment parameter, and may have one or more pieces of information. For example, if one rearing environment parameter is temperature information on a barn, and a value thereof is 25°C, the control target value is set to 25°C. The control target value may be for two of temperature and humidity. In this manner, multiple kinds of information can be set as a target value.

A control operation amount is a control signal for actually controlling a barn device 512 so that the barn 501 reaches the control target value, and is information sequentially determined according to the rearing environment information acquired sequentially by a barn measurement device 511. For example, if the control target value described above as an example is 25°C, and an actual temperature in the barn 501 is 18°C, the control operation amount is a parameter indicating the amounts of voltage and current for supplying power to a heater which is a heating device in the barn device 512 so that the actual temperature in the barn 501 reaches 25°C. If the barn device 512 is a window opening and closing device, the control operation amount is a parameter for adjusting the opening degree of a window.

### <Configuration>

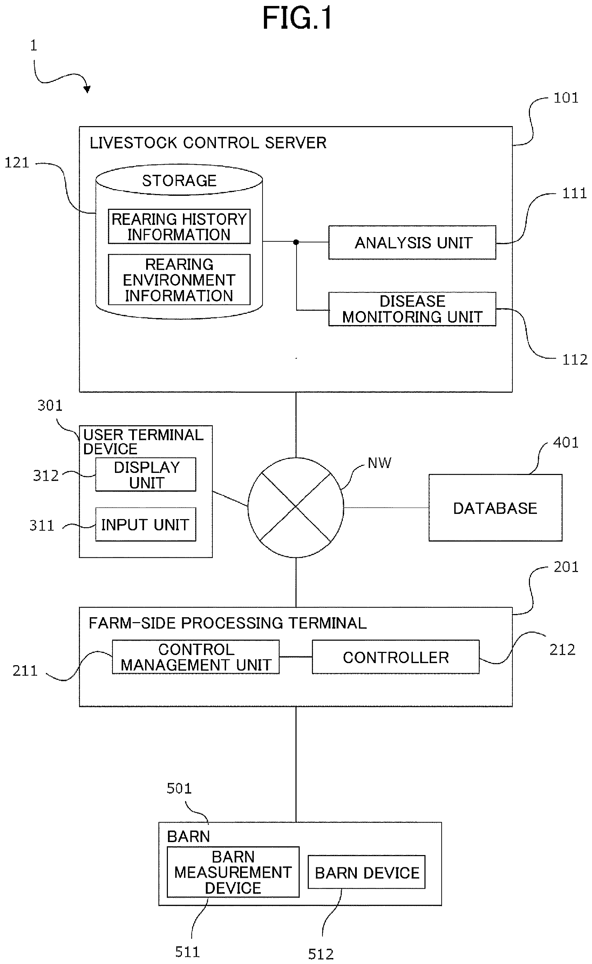

FIG. 1 is a system configuration diagram illustrating a livestock control system 1 including a livestock control server 101 according to an embodiment of the present disclosure. As shown in FIG. 1, in the livestock control system 1 according to the embodiment of the present disclosure, the livestock control server 101, a farm-side processing terminal 201, a user terminal device 301 used by a user, a database 401, and the barn 501 are communicably connected to each other via a network NW such as the Internet, LAN, or a virtual private network (VPN). For simplification of description, FIG. 1 illustrates only one user terminal device 301 assuming one user, but the livestock control server 101 is connectable to multiple terminal devices of multiple users via the network NW. Similarly, FIG. 1 illustrates only one barn 501 assuming one barn, but the livestock control server 101 is connectable to multiple barns via the network NW. The database 401 may be integrated with the livestock control server 101. A controller 212 of the farm-side processing terminal 201 may be integrated with the barn device 512 in the barn 501.

The livestock control system 1 is a system for supporting mainly the control of the barn environment by a livestock raiser. An operator of the livestock control system provides a service for supporting the control of barns to livestock raisers by using the system. The operator can provide services to multiple livestock raisers. The livestock control server 101 is managed by the operator of the livestock control system 1, and the user terminal device 301 is used by the livestock raiser. The livestock control server 101 may be managed by the livestock raiser himself/herself.

The livestock control server 101 includes an analysis unit 111, a disease monitoring unit 112, and a storage 121. The livestock control server 101 is, for example, a server device (server computer).

The analysis unit 111 has a function of extracting and subjecting rearing history information and rearing environment information stored in the storage 121 to be described later, to arithmetic processing, and generating a rearing environment parameter. Specifically, the analysis unit 111 has a function of analyzing a parameter that makes the rearing state of the livestock reared in the barn 501 suitable and generating a rearing environment parameter which is a basis for controlling the barn 501. The parameter that makes the rearing state of the livestock reared suitable is, for example, a rearing environment parameter that makes the rate of weight gain which is a weight increase index suitable when the livestock reared in the barn 501 is porkers. If the livestock reared in the barn is breeding livestock (mother pigs), the parameter that makes the rearing state of the livestock reared suitable is a rearing environment parameter that makes the pregnancy rate and the survival rate after childbirth suitable. The rearing history information further includes information for verifying whether or not rearing is efficiently performed, such as the rate of weight gain relative to the amount of feed demanded by livestock, and includes, in the case of breeding livestock, information on the number of babies born (normally/abnormally), deviation from an ideal pregnancy period, and the like.

More specifically, for example, particularly in pig farming, it is important to maintain the body temperatures of piglets for stable rearing. In this case, in the derivation of the rearing environment parameter, an optimal value of the raising environment parameter for obtaining optimal environment is calculated from various pieces of information such as the temperature, humidity, atmospheric pressure, and air flow in the barn 501, the body temperature, and the like. This allows suitable weight gain of piglets.

The analysis unit 111 generates a rearing environment parameter according to the breed of livestock reared in the barn 501, the time elapsed from the birth or weaning of the livestock, or the number of births of the livestock. This is to cope with the fact that the optimal environment varies as the individual livestock grows even in the case of the same livestock, and the fact that the optimal environment varies as the number of births increases, i.e., the parity increases in the case of mother pigs, for example.

The analysis unit 111 has a function of determining whether or not a target condition (predetermined condition) is satisfied after a predetermined time elapsed from the start of the control of the barn device 512 by using the control operation amount in accordance with the control target value generated by the control management unit 211 based on the rearing environment parameters generated. If the analysis unit 111 determines that the predetermined condition is not satisfied, it generates a second rearing environment parameter different from the previously generated rearing environment parameter (i.e., a first rearing environment parameter).

The analysis unit 111 may generate multiple rearing environment parameters (the first rearing environment parameter, the second rearing environment parameter, and the like) in advance, and transmit a rearing environment parameter selected from the generated rearing environment parameters to the control management unit 211 as required.

The disease monitoring unit 112 can analyze a relationship between disease occurrence and the rearing environment parameter based on a rearing record (rearing history information) and a treatment record stored in the storage 121 or the database 401 and generate a predictive factor parameter of the disease occurrence. The predictive factor parameter of the disease occurrence includes various basic parameters that are predictive values as possible causes, such as the temperature, the humidity, the air flow, the odor, and the body temperature, for symptoms such as diarrhea and diseases such as an infectious disease in livestock, for example. The disease monitoring unit 112 can analyze a relationship between disease information on the livestock such as a past disease occurrence date, the number of past disease occurrences, past disease details, and a past treatment record and various pieces of information such as the temperature, the humidity, the atmospheric pressure, and the like in the barn 501 input as the rearing environment information, predict generation of environment in which a disease is likely to occur, and generate the predictive factor parameter of disease occurrence.

Based on the derived predictive factor parameter of the disease occurrence, the disease monitoring unit 112 determines a monitoring parameter. The monitoring parameter includes thresholds of various pieces of information such as the temperature, the humidity, and the atmospheric pressure. The disease monitoring unit 112 or the control management unit 211 compares the rearing environment information sequentially acquired and transmitted by the barn measurement device 511 with the monitoring parameter, and determines whether or not numerical values of the rearing environment information exceed thresholds set as the monitoring parameter. In the determination, whether or not numerical values of the rearing environment information exceed thresholds set as the monitoring parameter can be detected as a determination by any calculation method such as the case where any of the pieces of information such as the temperature, the humidity, and the atmospheric pressure exceeds the threshold, the case where all of the pieces of information exceed the thresholds, and the case where the pieces of information are weighted and the weighted pieces of information exceed thresholds calculated in advance.

Once a numerical value exceeding any of the thresholds set as the monitoring parameter is detected, i.e., if the disease monitoring unit 112 or the control management unit 211 determines that the monitoring parameter indicates a possible cause of disease, the disease monitoring unit 112 generates alarm information. The generated alarm information can be issued as an alert to the display unit 312 of the user terminal device 301 and an external mobile terminal or other devices owned by a farmer or a veterinarian in charge, for example. This configuration allows immediate prediction and detection of a possible occurrence of a disease, once a predictive factor of a disease occurrence is found.

The storage 121 has a function of storing information on the rearing record, the disease record, the treatment record, and the shipping record of the livestock, and the rearing environment information. The information on the rearing record, the disease record, the treatment record, and the shipping record of the livestock may be extracted from the information stored in the database 401 to be described later as required, or inputted by the user with the input unit 311 of the user terminal device 301. For example, the past rearing record, the past disease record, the past treatment record, the past shipping record of the livestock, and other records are inputted from the database 401 at any timing, and stored as the rearing history information in the storage 121. The rearing environment information indicates the states of the barn 501 and the livestock reared in the barn 501, and the barn measurement device 511 to be described later installed in the barn 501 acquires the rearing environment information and stores trend information thereon in time series. The rearing environment information includes information on the temperature, the humidity, the atmospheric pressure, the air flow, the odor, the light quantity, and the sound level in the barn 501, the feeding amount and the water supply amount for the livestock, and the body temperature, the weight, and the activity amount of the livestock.

The farm-side processing terminal 201 is a terminal device installed in the farm, and is, for example, a personal computer or a dedicated computer or sequencer. The farm-side processing terminal 201 includes a control management unit 211 and a controller 212. The farm-side processing terminal 201 may be provided for each of the barn 501 and the barn device 512. The controller 212 may be configured separately from the farm-side processing terminal 201. The controller 212 may be integrated with the barn device 512 included in the barn 501 to be described later.

The control management unit 211 has a function of generating a control target value which is information for bringing the barn 501 to a target environment by using the rearing environment parameter generated by the analysis unit 111 of the livestock control server 101. The control target value is a target value for the environment state of the barn device 512 and the state of the livestock themselves, and information on the target value for the rearing environment information. For example, when the barn 501 has a certain size and includes multiple barn measurement devices 511 and multiple barn devices 512 installed, the control target value may be determined for each of the barn devices 512 so that the entire area of the barn 501 satisfies the rearing environment parameter.

The controller 212 sequentially, automatically determines information on the control operation amount of the barn device 512 relative to the control target value generated by the control management unit 211, by using the rearing environment information sequentially measured by the barn measurement device 511 to be described later. Then, the barn device 512 is sequentially controlled by using the control operation amount determined. When the barn 501 includes multiple barn devices 512, the control operation amount is determined according to each of the barn devices 512.

The user terminal device 301 is, for example, a device such as a personal computer, a smartphone, a tablet PC, and a mobile phone. The user terminal device 301 may access a livestock control server 101 via dedicated application software installed in the terminal. Alternatively, the user terminal device 301 may access the livestock control server 101 by using an operating environment (e.g., an application programming interface (API), cloud service, and a platform) provided by the livestock control server 101.

An input unit 311 is, for example, a device that can be operated by a user to input or select information, such as a keyboard, a mouse, a track ball, or a touch pad. Alternatively, a touch panel integrated with the display unit 312 such as a liquid crystal display or an organic EL display in a smartphone, a tablet, or a PC may be used. The input unit 311 may also be a voice input unit.

A display unit 312 is, for example, a display device that displays information or the like to the user. The display unit 312 may be a display device independent of the user terminal device 301, or may be a display device such as a liquid crystal display or an organic EL display in a smartphone or a tablet. The display unit 312 may have an audio output function.

The user terminal device 301 may be integrated with a server without using the livestock control server 101 and the network NW.

The database 401 has a function of storing information obtained by collecting, aggregating, and analyzing rearing data in a farm and arranging the analysis results as numerical information, and information obtained by analyzing big data on rearing of the livestock by using artificial intelligence or statistical analysis and arranging the analysis results as numerical information. The rearing data to be stored in the database 401 is stored in association with pieces of information such as information on the farm, the type of the livestock, information on the birth of the livestock, information on weight gain change, information on the rearing environment (rearing environment information) a disease history, a treatment history, a shipping record, and a shipping price. That is, for example, the rearing data are accumulated as mass data in association with information on the rearing environment in which information indicating a rearing record such as the pregnancy rate, the survival rate after childbirth, the dressed carcass weight, and the like of the livestock according to the type of the livestock. These pieces of information may be associated with each individual livestock, or herd (herd management) information in which multiple livestock are grouped. The database 401 may be integrated with the livestock control server 101. The data is not limited to the data of the farm, and data of farms in various parts of the country, various statistical data, and the like can be used.

The barn 501 is a building in the farm and is a place where the livestock are reared. For example, in the case where the barn 501 is a pig house, porkers are commonly reared in a plurality of divided pig pens in the barn. Each pig pen is an environment in which several tens of pigs are reared.

The barn measurement device 511 is a device configured to acquire rearing environment information on the barn 501. The barn measurement device 511 is a measurement machine installed in or around the barn 501, or directly on the livestock. Specifically, the barn measurement device 511 has a configuration having mainly various sensors, and examples thereof include a temperature measuring device, a humidity measuring device, an atmospheric pressure measuring device, an air flow measuring device, an odor measuring device, a light quantity measuring device, a sound measuring device, a feeding amount measuring device, a water supply amount measuring device, a body temperature measuring device, a weight measuring device, and an activity amount measuring device. The barn measurement device 511 may be any of these types of devices or a combination thereof. Multiple barn measurement devices 511 including various sensors sequentially acquire and digitize the temperature information, the humidity information, the atmospheric pressure information, the air flow information, the odor information, the light quantity information, the sound information, the feeding amount information, and the water supply amount information which relate to the rearing environment in the barn 501 and the body temperature information, the weight information, and the activity amount information of the livestock, and transmit them as rearing environment information to the livestock control server 101 or the farm-side processing terminal 201. The rearing environment information may be transmitted to the database 401.

The barn device 512 is a device configured to adjust the rearing environment in the barn 501. The barn device 512 includes a heater, a cooler, a ventilator, a sprayer, a humidifier, a dehumidifier, an illumination device, a window opening and closing device, a feeder, a drinking water server, an automatic feeder, and an automatic water server. The controller 212 controls the barn device 512 by using the control operation amount so that the rearing environment information acquired by the barn measurement device 511 reaches the control target value generated by the control management unit 211. The control operation amount may be, for example, a current signal of 4 mA to 20 mA, or may be a digitized signal. For example, when the current temperature is 18°C, and the target value of the temperature is 25°C, the control operation amount of the heater is adjusted, and the electric energy or the gas volume is increased to increase the temperature in the barn 501, thereby controlling the rearing environment information to reach the control target value. When the rearing environment information is odor, the ventilator or the window opening and closing device is controlled to reduce odor. For example, when the rearing environment information is the humidity and the outside humidity is high, control of reducing the humidity can be performed such that the window opening and closing device is closed, and dehumidification is performed by the cooler while preventing inflow of moisture from the outside. In this manner, the controller 212 controls the barn device 512, thereby controlling the rearing environment in the barn 501 and the like.

The barn device 512 is controlled to change the temperature information, the humidity information, the atmospheric pressure information, the air flow information, the odor information, the light quantity information, the sound information, the feeding amount information, the water supply amount information, the body temperature information, the weight information, and the activity amount information which are pieces of the rearing environment information. The rearing environment information includes information which is easily changed according to the control of the barn device 512 and the information that is not easily changed. For example, in order to reduce the temperature in the barn 501 in summer, it is necessary to increase the output of a cooling device, which requires electric power for continuously operating the cooling device at the maximum rating, or investment of an expensive cooling device with higher output. In contrast, in order to increase the humidity, water may be sprayed using the sprayer, and the cost of the spraying is lower than that of the cooling in many cases. In addition, the time required for increasing the humidity may be shorter than the time required for increasing the temperature. In this way, the ease or difficulty of changing each parameter such as the temperature and the humidity differs depending on the type of the rearing environment information, and which is defined as a movement difficulty level. In other words, in the above example, the movement difficulty level is a value obtained by dividing the change in the temperature or the humidity by the cost or the time required for the change. Depending on the environment in the barn, it is common that the movement difficulty level for the temperature is basically greater than the change difficulty level for the humidity. Further, for the relationship between the temperature and the humidity, even if the amount of moisture contained in the atmosphere is the same, the amount of saturated water vapor increases as the temperature increases, and therefore the humidity decreases. In addition, ventilation tends to increase or decrease the temperature by being affected by the outside air temperature and decrease odor. In this manner, the analysis unit 111 may generate the rearing environment parameter that makes the rearing environment suitable in consideration of the comprehensive movement difficulty level taking into account the correlation with different physical quantities of the rearing environment parameter.

The analysis unit 111 analyzes parameters by which the rearing state of the livestock to be reared is suitable, and generates a first rearing environment parameter, a second rearing environment parameter, and the like. The analysis unit 111 may not only generate the rearing environment parameter based on only the superiority of the rearing state, but also generate the rearing environment parameter which allows a reduction in cost for rearing by incorporating a parameter with less movement difficulty level as a determination criteria for the rearing environment parameter.

For example, multiple rearing environment parameters calculated by the analysis unit 111 are displayed on the user terminal device 301, and an operation cost for the barn device 512 is also displayed as an indicator. The user may then compare other factors such as the rate of weight gain, the predicted disease occurrence rate, the pregnancy rate and the survival rate after childbirth of the breeding livestock, and the like with the operation cost to select a suitable rearing environment parameter.

In the present embodiment, the analysis unit 111 can use artificial intelligence (e.g., random forest, support vector machine, genetic algorithm, and recurrent neural network) for deriving the rearing environment parameter. The rearing environment parameter for obtaining a favorable rearing record can be derived based on the past rearing data and the information on the rearing record as teacher data. However, the configuration of the analysis unit 111 is not limited thereto, and a general statistical processing algorithm (e.g., a decision tree or multiple regression analysis) may be used. The information from the database 401 and the rearing environment information may be periodically obtained. Alternatively, one or both types of the information may be obtained at any timing according to a user instruction.

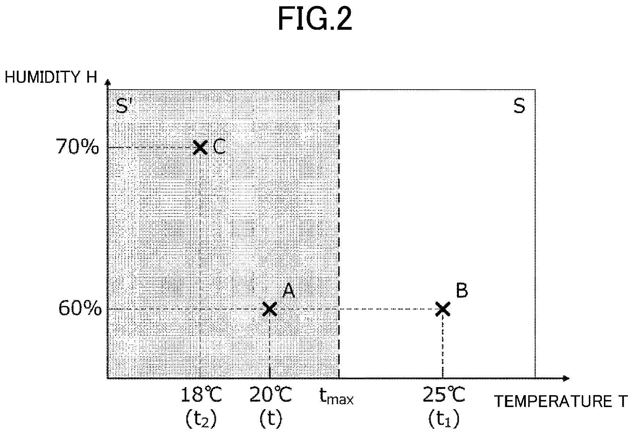

Next, the temperature and the humidity in the barn 501 according to the embodiment of the present disclosure will be described as an example with reference to FIG. 2. In FIG. 2, the horizontal axis indicates the temperature T in the barn 501, and the vertical axis indicates the humidity H in the barn 501. S represents an ideal region where the environment can be changed.

First, the point A indicates that the present livestock control system 1 before being actuated is in the state where the temperature is 20°C and the humidity is 60%.

For certain livestock, it is analyzed by the analysis unit 111 that the point B in the state where the temperature is 25°C and the humidity is 60% is suitable (the first optimum point) as the rearing environment, and the sets of data where the temperature is 25°C and the humidity is 60% are generated as rearing environment parameters. Here, the rearing environment parameters generated for the first time are referred to as first rearing environment parameters.

The control management unit 211 which has received the first rearing environment parameters generates the temperature of 25°C (t1) and the humidity of 60%, which are the first rearing environment parameters for the environment in the barn 501, as control target values. The controller 212 determines the control operation amount for controlling the barn device 512 such that the barn 501 reaches the control target values. The controller 212 controls the environment in the barn 501 by sequentially acquiring the rearing environment information on the barn (t represents the temperature) and sequentially changing the control operation amount.

For example, the means for changing the temperature from 20°C to 25°C will now be considered below. When the outside air temperature is 25°C or less, the window opening and closing device is controlled to close the window in order to block the outside air. Then, the heater is actuated to increase the temperature in the barn 501. While the temperature in the barn 501 is adjusted to 25°C, the humidity in the barn 501 is maintained at 60% by spraying water or by using a humidifier. This realizes the first rearing environment parameters, and allows suitable rearing of livestock.

However, depending on the type of the barn 501, the airtightness of the barn is low, whereby outside air enters inside. Thus, even if the heater is operated at the maximum capacity, the temperature may not be increased. In addition, there is a case where the capacity itself of the heater is insufficient. In FIG. 2, tmax represents the maximum attainment temperature in the case of using the heater in the barn. In other words, the control can be performed only in a region S' of FIG. 2. The maximum attainment temperature changes depending on the outside air temperature. Thus, tmax is not a value uniquely determined according to the barn, but a value that may always change. Therefore, even if the control is performed in such a case, it is considered that the temperature does not reach the target condition of 25°C after a predetermined time elapsed (e.g., after 1 hour or half a day) from the start of control. The barn measurement device 511 of the barn 501 periodically transmits the rearing environment information of the barn to the livestock control server 101. Thus, the analysis unit 111 determines that the rearing environment information does not satisfy the target condition (predetermined condition) after a predetermined time elapsed from the start of control of the barn device 512 in accordance with the first control target value generated based on the first rearing environment parameter.

Then, the analysis unit 111 analyzes the point C which is a suitable rearing environment condition (second optimum point) which is next to the first optimum point while satisfying the environment change condition by using tmax (the environment change condition) which is a limit value of the result of adjustment of the rearing environment in the barn 501 by using the first rearing environment parameter, and generates a second rearing environment parameter. For generation of the second rearing environment parameter, the rearing history information may be used.

It is analyzed that the temperature of 18°C and the humidity of 70% at the point C are suitable as the rearing environment, and the set of data including the temperature of 18°C and the humidity of 70% is generated as second rearing environment parameters.

The control management unit 211 that has received the second rearing environment parameters generates control target values so that the barn 501 reaches the environment of the temperature of 18°C (t2) and the humidity of 70%, which are the second rearing environment parameters. The controller 212 determines the control operation amount for controlling the barn device 512 such that the barn 501 device 512 reaches the control target values. The controller 212 controls the environment in the barn 501 by sequentially acquiring the rearing environment information on the barn 501 (t represents the temperature) and sequentially changing the control operation amount.

For example, the means for changing the temperature from 20°C to 18°C will now be considered below. When the outside air temperature is 18°C or less, the window opening and closing device is controlled to open the window in order to introduce the outside air, or the cooler is used to control the temperature to 18°C. While the temperature in the barn 501 is adjusted to 18°C, the humidity in the barn 501 is adjusted to 70% by using a water sprayer, a humidifier, and a dehumidifier. This realizes the second rearing environment parameters, and allows suitable rearing of livestock (at the second optimum point).

The environment change condition includes not only temperature, but also various parameters such as humidity, odor, and light, and indicates a limit value of control only by the barn device 512. These environment change conditions change depending on seasons, days, or time zones such as morning, noon, and evening, and the analysis unit 111 may generate the rearing environment parameter for each season, day, or time.

The control management unit 211 generates the control target values in accordance with the rearing environment parameters generated by the analysis unit 111 and the rearing environment information acquired by the barn measurement device 511. The controller 212 can determine the control operation amount by using the rearing environment information sequentially acquired from the barn measurement device 511 by the controller 212, sequentially control the barn device 512 by using the control operation amount determined by the controller 212, and stably maintain the environment inside the barn 501 so that the barn 501 reaches the control target values. The frequency of generation of the rearing environment parameters by the analysis unit 111 is less than the frequency of determination (generation) of the control operation amount by the controller 212. The controller 212 is installed in the farm-side processing terminal 201 installed inside the farm (physically in a short distance), a delay in communication with the barn measurement device 511 or the barn device 512, and the environment in the barn 501 can be controlled in real time.

As described above, when it is difficult to reach the target temperature of the first rearing environment parameter due to the environment in the barn 501, the second rearing environment parameter can be generated by adjusting the humidity, which is a physical quantity different from the temperature. Accordingly, it is possible to realize a suitable rearing environment according to the capacity of the barn 501. In addition to or instead of the temperature and the humidity, physical quantities such as atmospheric pressure, air flow, odor, light quantity, and sound may be adjusted, or the feeding amount and the water supply amount may be increased or decreased. In the above description, the rearing environment parameter defines two physical quantities, but may define one physical quantity. For example, in the case of livestock of a type where the rate of weight gain is favorable at the temperature p and the temperature r, but the rate of weight gain decreases at the temperature q which is a temperature between the temperature p and the temperature r, the temperature p is generated as the first rearing environment parameter, and when the temperature p is not realized due to the environment in the barn 501, the temperature r may be generated as the second rearing environment parameter. As described above, the rearing environment parameter may be generated based on one piece of information.

The livestock farming handled by the livestock control system 1 according to the present disclosure particularly includes pig farming. The barn is a pig house. For example, in the case of treating cattle as livestock, the cattle is raised at a lower raising density and managed one by one in detail, which leads to easier collection of individual data. In the case of poultry farming, the poultry is raised at a higher raising density but each has a smaller size, which allows statistical collection of data as a flock.

Next, an outline of an embodiment of the livestock control system 1 according to the present disclosure in pig farming will be described. In one embodiment, the barn measurement device 511 in the pig house periodically acquires rearing environment information of the temperature, the humidity, and the atmospheric pressure, and the storage 121 or the database 401 stores the rearing environment information acquired. The storage 121 or the database 401 further stores the number of childbirth deaths.

From the data acquired, the analysis unit 111 derives conditions such as the temperature, the humidity, and odor which optimize the rate of weight gain and generate the rearing environment parameter. The rearing environment parameter generated in this manner is transmitted to the control management unit 211 to generate a control target value. The controller 212 determines the control operation amount based on combination of the control target value generated and the rearing environment information inputted from the barn measurement device 511, and controls air conditioning, a ventilator, opening and closing of a window, and the like by the barn device 512. Accordingly, the temperature, the humidity, and the odor can be controlled to optimal conditions.

As another embodiment, temperature data is periodically acquired from the barn measurement device 511 in the pig house, and the feed consumption per type of feed and the water supply amount are acquired from the sensors (or a feeding amount measuring device and a water supply amount measuring device) attached to each individual pig, and registered in the storage 121 or the database 401. Further, the weight and the meat quality of shipped dressed carcass and feed information (e.g., the type and the composition ratio) are registered in the database 401.

From the data acquired, the analysis unit 111 derives the conditions such as the temperature, the feed consumption, the feed ingredients, and the water supply amount which optimize the weight and the meat quality of the dressed carcass for shipping through the analysis using machine learning to generate the rearing environment parameter. The rearing environment parameter generated in this manner is transmitted to the control management unit 211 to generate a control target value. The controller 212 determines the control operation amount based on combination of the control target value generated and the rearing environment information input from the barn measurement device 511, and controls supply amounts from the feeder and the drinking water server as well as controlling air conditioning, a ventilator, opening and closing of a window, and the like by the barn device 512.

### <Process Flow>

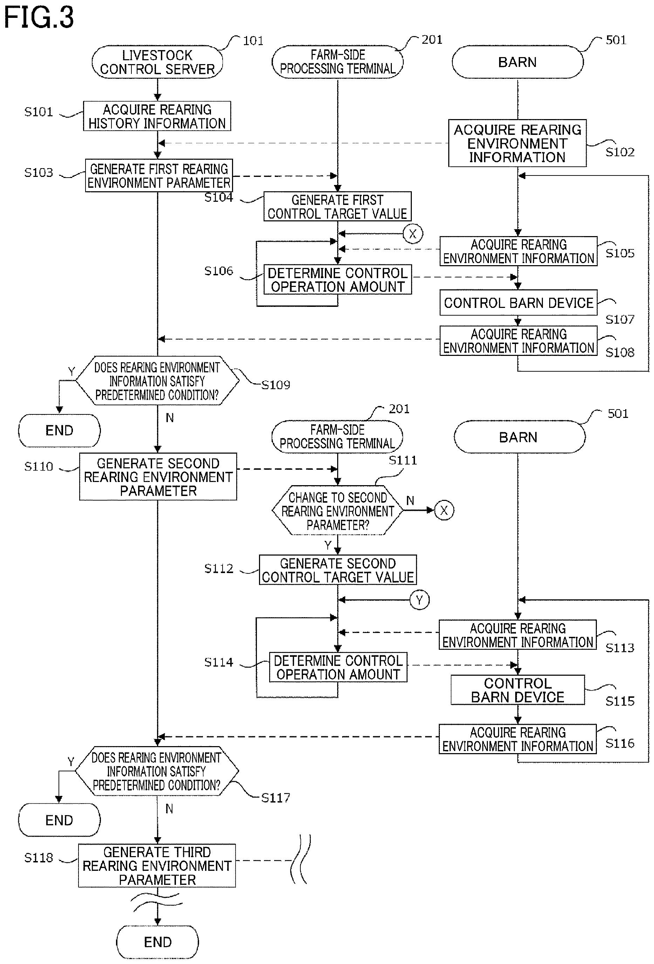

Next, the general operation of the livestock control system 1 according to the embodiment of the present disclosure described above with reference to FIG. 2 will be described with reference to the flowchart shown in FIG. 3.

FIG. 3 is a flowchart representing procedures for controlling the environment in the barn 501. The flowchart of FIG. 3 shows the related state of operations of a livestock control server 101, a farm-side processing terminal 201, and a barn 501 (a barn measurement device 511 and a barn device 512 included in the barn). The flowchart represents the operations targeted for the single barn 501, but in the case where multiple barns 501 are present, the same operation is performed for each barn.

In step S101, the livestock control server 101 acquires past rearing history information related to the rearing of livestock from a database 401. The rearing history information may be inputted by the user using an input unit 311 of a user terminal device 301. The rearing history information inputted is stored in a storage 121.

In step S102, the barn measurement device 511 provided in the barn 501 acquires the rearing environment information on the barn 501. The rearing environment information acquired is transmitted to the livestock control server 101, and stored in the storage 121.

In step S103, an analysis unit 111 generates a rearing environment parameter which is information on the target environment in the barn 501 by using the rearing environment information acquired. The rearing environment parameter is generated in accordance with the breed of the livestock reared in the barn 501, the time elapsed from the birth or the weaning of the livestock reared in the barn 501, or the number of births if the livestock reared in the barn 501 are breeding livestock, i.e., mother pigs. For example, if the livestock reared in the barn 501 is porkers, the analysis unit 111 generates the rearing environment parameter that makes the rate of weight gain, which is an indicator for weight increase, suitable. If the livestock reared in the barn 501 is breeding livestock (mother pigs), a rearing environment parameter that makes the pregnancy rate and the survival rate after childbirth suitable is generated. In order to describe the process flow, the rearing environment parameter generated in step S103 is referred to as a first rearing environment parameter. The first rearing environment parameter generated is transmitted to the farm-side processing terminal 201 (generating a first rearing environment parameter).

In step S104, the control management unit 211 generates a first control target value based on the first rearing environment parameter transmitted from the analysis unit 111 (generating a first control target value).

In step S105, the barn measurement device 511 provided in the barn 501 acquires rearing environment information of the barn 501. The rearing environment information acquired is transmitted to the farm-side processing terminal 201. The rearing environment information is sequentially transmitted from the barn measurement device 511 to the farm-side processing terminal 201.

In step S106, the controller 212 determines a control operation amount for controlling the barn device 512 by using the first control target value generated in step S104 and the rearing environment information acquired by the barn measurement device 511. The controller 212 transmits the control operation amount determined to the barn device 512.

In step S107, the barn device 512 is controlled in accordance with the control operation amount determined by the controller 212.

In step S108, the barn measurement device 511 provided in the barn 501 acquires the rearing environment information of the barn 501. The rearing environment information acquired is transmitted to the livestock control server 101, and stored in the storage 121. The rearing environment information does not necessarily need to be sequentially transmitted to the livestock control server 101, and may be transmitted at regular intervals. The rearing environment information may be transmitted according to a transmission request instruction from the livestock control server 101.

The processes from step S105 to step S108 (including step S106) can be repeatedly continued by loop processing while the barn 501 is in use.

In step S109, the analysis unit 111 determines whether or not the rearing environment information acquired by the barn measurement device 511 satisfies a target condition (predetermined condition) after a predetermined time elapsed (e.g., after 1 hour or half a day) from the start of control of the barn device 512 in accordance with the first control target value (determining). If the analysis unit 111 determines that the rearing environment information satisfies the target condition, it is appropriate that the controller 212 determines the control operation amount based on the first control target value and performs control, and processing of the livestock control server 101 is temporarily ended. If the analysis unit 111 determines that the rearing environment information does not satisfy the target condition, it is difficult to perform control based on the first control target value, and the process proceeds to step S110.

In step S110, the analysis unit 111 generates a second rearing environment parameter different from the first rearing environment parameter which is target environment information on the barn 501 by using the rearing environment information acquired. Although the second rearing environment parameter is inferior to the rate of weight gain, the pregnancy rate, and the survival later after childbirth obtained when the first rearing environment parameter is realized, it allows generation of a condition that becomes a next preferable condition. The second rearing environment parameter may be generated according to the movement difficulty level which is the degree of difficulty in changing of each factor of the rearing environment. The second rearing environment parameter generated is transmitted to the farm-side processing terminal 201 (generating a second rearing environment parameter).

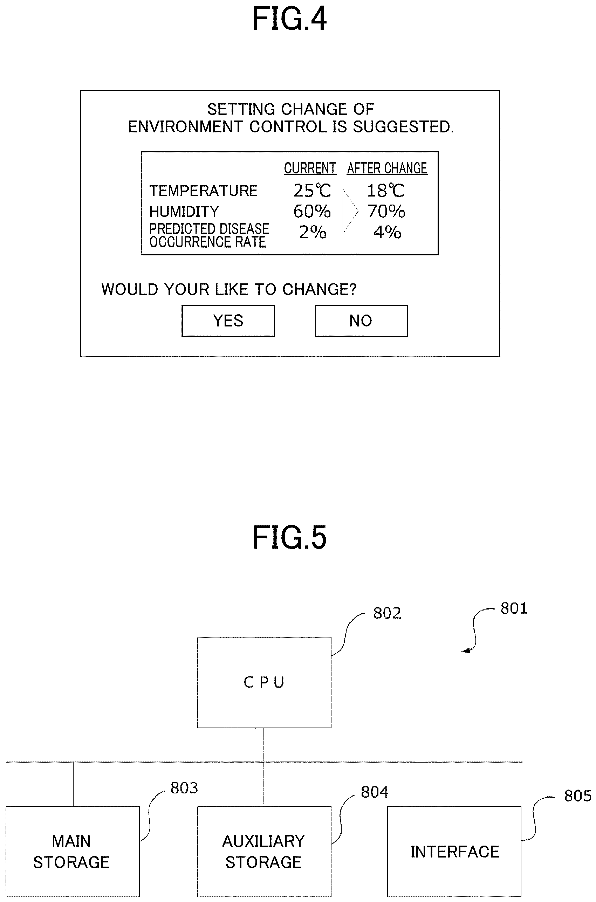

In step Sill, the farm-side processing terminal 201 displays a screen shown in FIG. 4 on the display unit 312 of the user terminal device 301. In the screen shown in FIG. 4, numerical values shown in a column of "CURRENT" are first rearing environment parameters, and numerical values in a column of "AFTER CHANGE" are second rearing environment parameters. In FIG. 4, the predicted disease occurrence rate is currently 2%, but is 4% after change. This information is also a determination criteria for the user to determine whether or not the user accepts the change. The user can input YES (Y) or NO (N) from the input unit 311 to determine whether or not the rearing environment parameter is changed from the first rearing environment parameter to the second rearing environment parameter. In FIG. 4, if "YES" (Y) is selected for "WOULD YOUR LIKE TO CHANGE?", the rearing environment parameter is changed to the second rearing environment parameter, and if "NO" (N) is selected, the rearing environment parameter remains the first rearing environment parameter. If "YES" is selected, i.e., if Y, the process proceeds to step S112. IF "NO" is selected, i.e., if N, the process proceeds from X to step S106, and the control according to the first control target value is continued.

In step S112, the control management unit 211 generates a second control target value based on the second rearing environment parameter transmitted from the analysis unit 111 (generating a second control target value).

In step S113, the barn measurement device 511 provided in the barn 501 acquires the rearing environment information of the barn 501. The rearing environment information acquired is transmitted to the farm-side processing terminal 201. The rearing environment information is sequentially transmitted from the barn measurement device 511 to the farm-side processing terminal 201.

In step S114, the controller 212 determines a control operation amount for controlling the barn device 512 by using the second control target value generated in step S112 and the rearing environment information acquired by the barn measurement device 511. The controller 212 transmits the control operation amount determined to the barn device 512.

In step S115, the barn device 512 is controlled in accordance with the control operation amount determined by the controller 212.

In step S116, the barn measurement device 511 provided in the barn 501 acquires the rearing environment information of the barn 501. The rearing environment information acquired is transmitted to the livestock control server 101, and stored in the storage 121. The rearing environment information does not necessarily need to be sequentially transmitted to the livestock control server 101, and may be transmitted at regular intervals. The rearing environment information may be transmitted according to a transmission request instruction from the livestock control server 101.

The processes from step S113 to step S116 (including step S114) can be repeatedly continued by loop processing while the barn 501 is in use.

In step S117, the analysis unit 111 determines whether or not the rearing environment information acquired by the barn measurement device 511 satisfies a target condition (predetermined condition) after a predetermined time elapsed (e.g., after 1 hour or half a day) from the start of control of the barn device 512 in accordance with the second control target value. If the analysis unit 111 determines that the rearing environment information satisfies the target condition, it s appropriate that the controller 212 determines the control operation amount based on the second control target value and performs control, and the processing of the livestock control server 101 is temporarily ended. If the analysis unit 111 determines that the rearing environment information does not satisfy the target condition, it is difficult to perform control based on the second control target value, and the process proceeds to step S118.

In step S118, the analysis unit 111 generates a third rearing environment parameter different from the first and second rearing environment parameters which are target environment information on the barn 501 by using the rearing environment information acquired. Although the third rearing environment parameter is inferior to the rates of weight gain, the pregnancy rates, and the survival rates after childbirth obtained when the first and second rearing environment parameters are realized, it allows generation of a condition that becomes a preferable condition. The third rearing environment parameter may be generated according to the movement difficulty level which is the degree of difficulty in changing of each factor of the rearing environment. The third rearing environment parameter generated is transmitted to the farm-side processing terminal 201. Thereafter, the same processes can be repeatedly performed, and the processes may be performed to generate a fourth rearing environment parameter and a fifth rearing environment parameter.

With this configuration, in the present embodiment, the analysis unit 111 determines a rearing environment parameter, and then, as shown in FIG. 3, the controller 212 can continuously control the barn device 512 by using the control operation amount determined by the controller 212 based on the control target value once generated by the control management unit 211 and the rearing environment information sequentially acquired by the barn measurement device 511, without analysis processing by the analysis unit 111. There is thus no need to separately control the barn device 512 while calculating the optimal parameter by the analysis unit 111 each time. Rationalization of the environment management and control of the barn 501, higher efficiency of the devices, and reduction of the loads, for example, are thus achieved.

The rearing history information input to the storage 121 is periodically updated. Once the update is performed, the analysis unit 111 recalculates the rearing environment parameter. Thereafter, as shown in FIG. 3, the control management unit 211 derives a new control target value based on the rearing environment parameter after the recalculation and the rearing environment information, and the controller 212 sequentially determines the control operation amount by using the control target value after the update and the rearing environment information transmitted from the barn measurement device 511, and instructs and controls the operation of the barn device 512. By repeating this operation, the management of the livestock environment is automatically and continuously performed by the livestock control system 1 according to the present disclosure.

As described above, the livestock control system 1 according to the present disclosure is a livestock control system 1 for controlling environment in a barn 501 where livestock is reared, including: a barn measurement device 511 configured to acquire rearing environment information on a barn 501; a barn device 512 configured to adjust rearing environment in the barn 501; and an analysis unit 111 configured to generate a rearing environment parameter which is information on target environment in the barn 501, by using the rearing environment information acquired by the barn measurement device 511, in which the analysis unit 111 is further configured to generate a second rearing environment parameter if it is determined that the rearing environment information acquired does not satisfy a predetermined condition after a predetermined time elapsed from the start of the control of the barn device 512 in accordance with a first rearing environment parameter. With such a system, it is possible to set an appropriate rearing environment parameter according to the capacity of the barn, and it is possible to provide suitable rearing environment of the barn according to a wide variety of barns of various farms. In addition, for example, even in the case where the natural environment is greatly different, for example, in Hokkaido and Okinawa, it is possible to provide suitable rearing environment using existing barn facilities.

In the embodiment described above, a configuration is such that the control management unit 211 generates a control target value based on the rearing environment parameter generated by the analysis unit 111, and the controller 212 determines a control operation amount for controlling the barn device 512 so that the rearing environment information acquired by the barn measurement device 511 reaches the control target value. However, the present disclosure is not limited by the configuration. For example, the controller 212 may be configured to determine a control operation amount for controlling the barn device 512 so that the rearing environment information acquired by the barn measurement device 511 reaches a value based on the rearing environment parameter generated by the analysis unit 111.

### (Program)

FIG. 5 is a schematic block diagram showing the configuration of a computer 801. The computer 801 includes a CPU 802, a main storage 803, an auxiliary storage 804, and an interface 805. The CPU 802 may be a GPU.

Here, a program for realizing each function constituting the livestock control server 101 according to each embodiment will be described in detail.

The livestock control server 101 is mounted on the computer 801. The operation of each component of the livestock control server 101 is stored in the auxiliary storage 804 in the form of a program. The CPU 802 reads the program from the auxiliary storage 804, expands the program to the main storage 803, and executes the processes according to the program. In addition, the CPU 802 allocates storage areas corresponding to the above-described storage units in the main storage 803 according to the program.

Specifically, the program is a livestock control program for managing, in a computer 801, environment in a barn where livestock is reared, and causes the computer 801 to execute: generating a first rearing environment parameter which is information on target environment in the barn by using the rearing environment information on the barn acquired by the barn measurement device; determining whether or not the rearing environment information acquired by the barn measurement device satisfies a predetermined condition after a predetermined time elapsed from the start of the control of the barn device for adjusting the rearing environment in the barn in accordance with the first rearing environment parameter; and generating a second rearing environment parameter if the analysis unit determines that the rearing environment information acquired by the barn measurement device does not satisfy the predetermined condition in the determining.

The auxiliary storage 804 is an example of a non-transitory tangible medium. Other examples of the non-transitory tangible medium include magnetic disks, magneto-optical disks, CD-ROMs, DVD-ROMs, and semiconductor memories, to be connected via the interface 805. Alternatively, if the program is distributed to the computer 801 via the network NW, the computer 801 receiving the distribution may expand the program to the main storage 803, and execute the processes.

The program may realize some of the above-described functions. The program may also be a so-called differential file (differential program) that realizes the above-described functions in combination with other programs which have been stored in the auxiliary storage 804.

Although some embodiments of the present disclosure have been described above, these embodiments can be implemented in various other forms, and various omissions, substitutions, and changes can be made without departing from the spirit of the present disclosure. These embodiments and variations thereof are included in the scope and spirit of the present disclosure, and are also included in the disclosure described in the claims and the equivalent scope thereof. The embodiments have been described above with reference to an example where the livestock is pigs, but the livestock control system may be applied to other livestock such as cattle and poultry.

### DESCRIPTION OF REFERENCE CHARACTERS

- 1: Livestock Control System
- 101: Livestock Control Server
- 111: Analysis Unit
- 112: Disease Monitoring Unit
- 121: Storage Unit
- 201: Farm-Side Processing Terminal
- 211: Control Management Unit
- 212: Controller
- 301: User Terminal Device
- 311: Input Unit
- 312: Display Unit
- 401: Database
- 501: Barn
- 511: Barn Measurement Device
- 512: Barn Device
- 801: Computer
- 802: CPU
- 803: Main Storage
- 804: Auxiliary Storage
- 805: Interface

## Claims

1. A livestock control system for controlling environment in a barn where livestock is reared, the system **characterized by** comprising:
a barn measurement device configured to acquire rearing environment information on the barn;
a barn device configured to adjust rearing environment in the barn; and
an analysis unit configured to generate a rearing environment parameter which is information on target environment in the barn by using the rearing environment information acquired by the barn measurement device, wherein
the analysis unit is further configured to generate a second rearing environment parameter if it is determined that the rearing environment information acquired by the barn measurement device does not satisfy a predetermined condition after a predetermined time elapsed from start of control of the barn device in accordance with a first rearing environment parameter.

2. The livestock control system of claim 1, further comprising:
a control management unit configured to generate a control target value for controlling the barn device, wherein
the control management unit generates a first control target value by using the first rearing environment parameter generated by the analysis unit, and
the analysis unit is further configured to generate a second rearing environment parameter if it is determined that the rearing environment information acquired by the barn measurement device does not satisfy a predetermined condition after a predetermined time elapsed from start of control of the barn device in accordance with the first control target value.

3. The livestock control system of claim 2, further comprising:
a display unit configured to display information to a user; and an input unit configured to receive an input of information from the user, wherein
the display unit displays information according to the first rearing environment parameter and information according to the second rearing environment parameter, and
the input unit receives, from the user, an input for allowing the control management unit to generate a second control target value by using the second rearing environment parameter.

4. The livestock control system of any one of claims 1 to 3, wherein
the analysis unit generates the rearing environment parameter by further using rearing history information on a rearing history of the livestock.

5. The livestock control system of any one of claims 1 to 4, wherein
the second rearing environment parameter is selected from multiple rearing environment parameters generated in advance by the analysis unit.

6. The livestock control system of any one of claims 1 to 5, wherein
the analysis unit generates the second rearing environment parameter by using an environment change condition calculated in accordance with the rearing environment information acquired by the barn measurement device in the barn with rearing environment adjusted by the barn device controlled in accordance with the first rearing environment parameter.

7. The livestock control system of claim 6, wherein
the analysis unit generates the rearing environment parameter without using the environment change condition after a predetermined time elapsed from generation of the second rearing environment parameter.

8. The livestock control system of any one of claims 1 to 7, wherein
the analysis unit generates the rearing environment parameter in accordance with a breed of the livestock reared in the barn, a time elapsed from birth or weaning of the livestock reared in the barn, or the number of births of the livestock reared in the barn.

9. The livestock control system of any one of claims 1 to 8, further comprising:
a controller configured to control the barn device, wherein
the controller sequentially calculates a control operation amount of the barn device so that the rearing environment information acquired by the barn measurement device reaches a state corresponding to the rearing environment parameter, and
the controller controls the barn device by using the control operation amount calculated.

10. The livestock control system of claim 9, wherein
a frequency of generating the rearing environment parameter by the analysis unit is less than a frequency of generating the control operation amount by the controller.

11. The livestock control system of any one of claims 1 to 10, wherein
the rearing environment parameter is at least one piece of information selected from temperature information, humidity information, atmospheric pressure information, air flow information, odor, a light quantity, sound information, a feeding amount, and a water supply amount.

12. The livestock control system of any one of claims 1 to 10, wherein
the rearing environment parameter is at least two pieces of information selected from temperature information, humidity information, atmospheric pressure information, air flow information, odor, a light quantity, sound information, a feeding amount, and a water supply amount, and
the analysis unit generates the second rearing environment parameter by changing the at least two pieces of information included in the first rearing environment parameter.

13. The livestock control system of any one of claims 1 to 12, wherein
the rearing history information includes at least one piece of information selected from a rearing record, a disease record, a treatment record, and a shipping record of the livestock.

14. The livestock control system of any one of claims 1 to 13, wherein
the rearing environment information includes at least one piece of information selected from temperature information, humidity information, atmospheric pressure information, air flow information, odor information, light quantity information, sound information, feeding amount information, water supply amount information, body temperature information, weight information, and activity amount information.

15. The livestock control system of any one of claims 1 to 14, wherein
the barn measurement device includes at least one device selected from a temperature measuring device, a humidity measuring device, an atmospheric pressure measuring device, an air flow measuring device, an odor measuring device, a light quantity measuring device, a sound measuring device, a feeding amount measuring device, a water supply amount measuring device, a body temperature measuring device, a weight measuring device, and an activity amount measuring device.

16. The livestock control system of any one of claims 1 to 15, wherein
the barn device includes at least one device selected from a heater, a cooler, a ventilator, a sprayer, a humidifier, a dehumidifier, an illumination device, a window opening and closing device, a feeder, a drinking water server, an automatic feeder, and an automatic water server.

17. The livestock control system of any one of claims 1 to 16, further comprising:
a disease monitoring unit, wherein
the disease monitoring unit generates a predictive factor parameter of disease occurrence by using a relationship between the disease occurrence and the rearing environment parameter based on at least one piece of information selected from a rearing record, a disease record, and a treatment record of the livestock in rearing history information, determines a monitoring parameter by using the predictive factor parameter of the disease occurrence, and generates alarm information if it is determined that the rearing environment information acquired by the barn measurement device satisfies a predetermined condition for the monitoring parameter.

18. The livestock control system of any one of claims 1 to 17, wherein
the livestock includes a pig.

19. A livestock control server for controlling environment in a barn where livestock is reared, the server **characterized by** comprising:
an analysis unit configured to generate a rearing environment parameter which is information on target environment in the barn by using rearing environment information on the barn acquired by a barn measurement device, wherein
the analysis unit is further configured to generate a second rearing environment parameter if it is determined that the rearing environment information acquired by the barn measurement device does not satisfy a predetermined condition after a predetermined time elapsed from start of control of a barn device for adjusting rearing environment in the barn in accordance with a first rearing environment parameter.

20. A livestock control method for controlling environment in a barn where livestock is reared, the method **characterized by** comprising:
generating, by an analysis unit, a first rearing environment parameter which is information on target environment in the barn by using rearing environment information on the barn acquired by a barn measurement device;
determining, by the analysis unit, whether or not the rearing environment information acquired by the barn measurement device satisfies a predetermined condition after a predetermined time elapsed from start of control of a barn device for adjusting rearing environment in the barn in accordance with the first rearing environment parameter; and
generating, by the analysis unit, a second rearing environment parameter if it is determined that the rearing environment information acquired by the barn measurement device does not satisfy the predetermined condition in the determining.

21. A livestock control program for controlling environment in a barn where livestock is reared, the program **characterized by** causing a computer to execute:
generating a first rearing environment parameter which is information on target environment in the barn by using rearing environment information on the barn acquired by a barn measurement device;
determining whether or not the rearing environment information acquired by the barn measurement device satisfies a predetermined condition after a predetermined time elapsed from start of control of a barn device for adjusting rearing environment in the barn in accordance with the first rearing environment parameter; and
generating a second rearing environment parameter if it is determined that the rearing environment information acquired by the barn measurement device does not satisfy the predetermined condition in the determining.
